# EUROPEAN PATENT APPLICATION

(11) **EP 4 589 422 A1**
(43) Date of publication of application: **23.07.2025**
(21) Application number: 22959174.8
(22) Date of filing: 23.09.2022
(51) Int. Cl.: G06F 8/65, G06F 8/71

(54) **SENSOR SOFTWARE CHANGE METHOD AND APPARATUS, AND INTELLIGENT DRIVING DEVICE**

(71) Applicant: Shenzhen Yinwang Intelligent Technologies Co., Ltd., Shenzhen, Guangdong 518129 (CN)
(72) Inventor: LIN, Le, Shenzhen, Guangdong 518129 (CN); JIANG, Zehao, Shenzhen, Guangdong 518129 (CN); HU, Long, Shenzhen, Guangdong 518129 (CN); YOU, Haijun, Shenzhen, Guangdong 518129 (CN)
(74) Representative: Körber, Martin Hans
(86) International application number: PCT/CN2022/120701
(87) International publication number: WO 2024/060166

(57) **Abstract**

This application discloses a sensor software change method. The method is applied to an intelligent driving device, and includes: after a sensor is connected to the intelligent driving device, obtaining a first software version number of the sensor; then, obtaining a second software version number of a first software package corresponding to the sensor, where the first software package is stored in the intelligent driving device in advance; and finally, if the first software version number is inconsistent with the second software version number, sending the first software package to the sensor, where the first software package is used by the sensor to change software. **In** this way, the software package stored in advance is used, to quickly change the software of the sensor without a network connection.

## Description

### TECHNICAL FIELD

This application relates to the field of intelligent driving, and in particular, to a sensor software change method and apparatus, and an intelligent driving device.

### BACKGROUND

Advancement of vehicle intelligence relies on development of a sensor. As a level of intelligence is improved, an environment that needs to be sensed becomes more complex, and a quantity of sensors mounted on a vehicle also increases. Currently, a vehicle with an assisted driving function sold in the market is usually equipped with a plurality of types or a plurality of sensors such as a lidar and a millimeter wave radar. Data collected by a sensor is transmitted to a vehicle-mounted computing platform, and the vehicle-mounted computing platform performs various processing on the data. Therefore, a software version of the vehicle-mounted computing platform needs to be consistent with that of the sensor.

In a scenario in which a sensor needs to be replaced due to a fault, a hardware update, or the like, if a software version of a connected sensor is inconsistent with a software version running on an intelligent driving device, a function of the sensor cannot be used. In this scenario, to ensure normal use of the sensor, software of the sensor needs to be changed in time.

Currently, a software change manner of a sensor mainly includes an over-the-air (over-the-air, OTA) change manner. However, the OTA change manner depends on network communication quality and needs a network connection to download a software package. Therefore, a process of downloading the software package consumes time and traffic.

### SUMMARY

This application provides a sensor software change method and apparatus, and an intelligent driving device, to quickly change software of a sensor without a network connection.

A first aspect of this application provides a sensor software change method, applied to an intelligent driving device. After a sensor is connected to the intelligent driving device, the intelligent driving device performs query and obtains a first software version number of the sensor. Then, the intelligent driving device obtains a second software version number of a first software package corresponding to the sensor. The first software package is stored in the intelligent driving device in advance. Finally, the intelligent driving device compares the first software version number with the second software version number. If the first software version number is inconsistent with the second software version number, the first software package is sent to the sensor, so that the sensor changes software based on the first software package.

In this application, after detecting that a sensor is connected, the intelligent driving device actively performs query and obtains the first software version number of the sensor, to automatically query for a version without manual intervention after the sensor is inserted. After obtaining the first software version number of the sensor, the intelligent driving device locally obtains the second software version number of the first software package corresponding to the sensor, and compares the second software version number with the first software version number, to check a software version of the sensor. If it is determined that the first software version number is inconsistent with the second software version number, the first software package is sent to the sensor, so that the sensor can change software based on the first software package, thereby ensuring that the software version of the sensor is consistent with the software version of the intelligent driving device, and a function of the sensor can be normally used. According to this method, a software package corresponding to the sensor is locally stored in advance, so that when the software version of the sensor needs to be changed, software of the sensor can be quickly changed without a network connection. In this way, a download operation based on a network connection is omitted, and a process of participation by maintenance personnel is also omitted, thereby improving maintenance efficiency.

In a possible implementation, the first software package may be stored in the intelligent driving device in the following manner.

First, a second software package of the intelligent driving device is obtained from a network. Then, the intelligent driving device obtains, from the second software package, M software packages respectively corresponding to M types of sensors. M is a positive integer greater than or equal to 1. When a storage condition is met, N software packages are obtained from the M software packages and are stored. N is less than or equal to M, and the N software packages include the first software package.

In this possible implementation, before detecting and changing the software version of the connected sensor, the intelligent driving device locally stores the software package corresponding to the sensor in advance, to upgrade the sensor offline. This avoids a network problem that occurs when the software package is downloaded online, and quickly changes software without a network connection. In addition, after obtaining a corresponding entire software upgrade package, that is, the second software package, the intelligent driving device usually stores the complete second software package. However, to avoid a problem in which a cached software package is excessively large and occupies remaining storage space of the intelligent driving device, a type and a quantity of software packages cached in the remaining storage space of a memory may be flexibly adjusted, thereby improving storage space utilization. When the storage condition is met, only the N software package that can meet a requirement is cached, and the N software package includes the first software package corresponding to the sensor, thereby avoiding a problem of wasting storage space.

In a possible implementation, the storage condition includes that a relationship between a size of the N software packages and the remaining storage space of the memory of the intelligent driving device meets a preset condition.

In this possible implementation, to avoid a waste of storage space, the size of the N software packages in the M software packages is compared with the remaining storage space of the memory, and the N software packages are stored only when the preset condition is met. This avoids a problem in which a cache occupies too much space, and fully utilizes the remaining storage space of the memory of the intelligent driving device.

In a possible implementation, before the first software version number of the sensor is obtained, connection authentication is performed on the sensor. After the connection authentication succeeds, a communication connection to the sensor is established.

In this possible implementation, the connection authentication is performed on the sensor, to ensure that the connected sensor can normally communicate with the intelligent driving device, and ensure a subsequent automatic change of the software of the sensor when a communication fault is excluded.

In a possible implementation, a main step of obtaining the first software version number of the sensor includes: sending a version query request to the sensor, and receiving the first software version number fed back by the sensor.

In this possible implementation, after detecting that a sensor is connected, the intelligent driving device actively sends the version query request to the sensor, to automatically query for the version after insertion. When a version change requirement is met, a quick upgrade after insertion is completed, without maintenance personnel participating in a software change process.

A second aspect of this application provides a sensor software change apparatus. For beneficial effects, refer to the descriptions in the first aspect. Details are not described herein again. The apparatus has a function of implementing the behavior in the method example in the first aspect. The function may be implemented by hardware, or may be implemented by hardware executing corresponding software. The hardware or the software includes one or more modules corresponding to the function. In a possible design, the apparatus is used in an intelligent driving device, and includes:
an obtaining module, configured to: after a sensor is connected to the intelligent driving device, obtain a first software version number of the sensor, where
the obtaining module is further configured to obtain a second software version number of a first software package corresponding to the sensor, where the first software package is stored in the intelligent driving device in advance; and
a communication module, configured to: if the first software version number is inconsistent with the second software version number, send the first software package to the sensor, where the first software package is used by the sensor to change software.

In a possible implementation, the obtaining module is further configured to obtain a second software package of the intelligent driving device;
the obtaining module is further configured to obtain, from the second software package, M software packages respectively corresponding to M types of sensors, where M is a positive integer greater than or equal to 1; and
the obtaining module is further configured to: when a storage condition is met, obtain and store N software packages from the M software packages, where N is less than or equal to M, and the N software packages include the first software package.

In a possible implementation, the storage condition includes that a relationship between a size of the N software packages and the remaining storage space of the memory of the intelligent driving device meets a preset condition.

In a possible implementation, the communication module is further configured to:
after detecting that the sensor is connected to the intelligent driving device, perform connection authentication on the sensor, and establish a communication connection to the sensor after the connection authentication succeeds.

In a possible implementation, the obtaining module is specifically configured to:
after sending a version query request to the sensor via the communication module, receive, via the communication module, the first software version number fed back by the sensor.

The modules may perform corresponding functions in the method example in the first aspect. For details, refer to the detailed descriptions in the method example. Details are not described herein again.

A third aspect of this application provides a sensor software change apparatus, including at least one memory and a processor. The memory stores code. The processor is configured to execute the code, to enable the sensor software change apparatus to perform the method according to the first aspect or any one of the possible implementations of the first aspect.

A fourth aspect of this application provides an intelligent driving device, including at least one sensor and a controller. The controller executes computer-executable instructions to implement the method according to the first aspect or any one of the possible implementations of the first aspect, or the controller is the sensor software change apparatus according to the second aspect or the third aspect.

A fifth aspect of this application provides a computer storage medium. The computer storage medium stores a computer program. When the program is executed by a computer, the computer is enabled to implement the method according to the first aspect or any one of the possible implementations of the first aspect.

A sixth aspect of this application provides a computer program product. When the computer product is executed by a computer, the method according to the first aspect or any one of the possible implementations of the first aspect is implemented.

A seventh aspect of this application provides a chip system. The chip system includes a processor, configured to implement functions of the intelligent driving device in the method in the foregoing aspects. In a possible design, the chip system further includes a memory, configured to store program instructions and/or data. The chip system may include a chip, or may include a chip and another discrete device.

The solutions in the second aspect to the seventh aspect are used to implement or cooperate with the method in the first aspect or any one of the possible implementations of the first aspect, and therefore can achieve beneficial effects the same as or corresponding to the first aspect. Details are not described herein again.

### BRIEF DESCRIPTION OF DRAWINGS

FIG. 1 is a diagram of an application scenario of a sensor software change method according to an embodiment of this application;
FIG. 2 is a schematic flowchart of an OTA software upgrade method according to an embodiment of this application;
FIG. 3 is a schematic flowchart of a local-end software upgrade method according to an embodiment of this application;
FIG. 4 is a schematic flowchart of a sensor software change method according to an embodiment of this application;
FIG. 5 is a diagram of operation display of a sensor software change method according to an embodiment of this application;
FIG. 6 is another schematic flowchart of a sensor software change method according to an embodiment of this application;
FIG. 7 is a diagram of a structure of a sensor software change apparatus according to an embodiment of this application;
FIG. 8 is a diagram of a structure of another sensor software change apparatus according to an embodiment of this application; and
FIG. 9 is a diagram of a structure of an intelligent driving device according to an embodiment of this application.

### DESCRIPTION OF EMBODIMENTS

The following clearly and completely describes the technical solutions in embodiments of this application with reference to the accompanying drawings in embodiments of this application.

The following clearly and completely describes the technical solutions in embodiments of the present invention with reference to the accompanying drawings in embodiments of the present invention. It is clear that the described embodiments are merely some embodiments rather than all embodiments of the present invention. All other embodiments obtained by a person skilled in the art based on embodiments of the present invention without creative efforts shall fall within the protection scope of the present invention. A person skilled in the art may learn that, with development of technologies and emergence of a new scenario, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the data termed in such a way may be interchangeable in proper circumstances, so that embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should also be noted that in some alternative implementations, the marked functions/actions may not appear in orders of the accompanying drawings. For example, actually, two accompanying drawings shown in succession may essentially occur at the same time or may sometimes be performed in a reverse order, depending on the related functions/actions.

In embodiments of this application, unless otherwise specified, "at least one" means one or more, and "a plurality of" means two or more. It may be understood that, in this application, "when" and "if" all mean that an apparatus performs corresponding processing in an objective situation, and are not intended to limit time. The terms do not mean that the apparatus is required to have a determining action during implementation, and do not mean any other limitation. In addition, the specific term "example" means "used as an example, embodiment or illustration". Any embodiment described as an "example" is not necessarily explained as being superior or better than other embodiments.

For ease of understanding, the following describes a scenario to which a sensor software change method provided in embodiments of this application is applied. The sensor software change method is applied to an intelligent driving device. It should be noted that the intelligent driving device has various types and a wide application scope, and is not limited to an intelligent vehicle. The intelligent driving device may be an intelligent vehicle, an intelligent machine device independent of a vehicle, a mobile terminal, or the like, for example, an intelligent device such as an intelligent robot that can run a computer program of a sensor software change method.

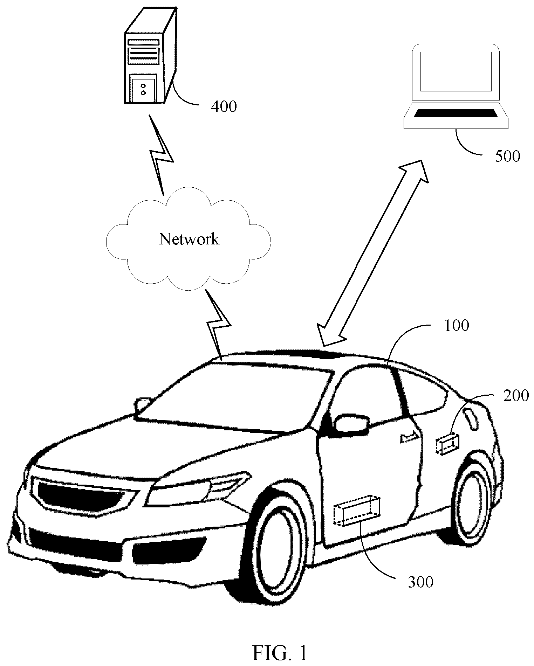

An example in which an intelligent driving device is an intelligent vehicle is used to describe an application scenario of the sensor software change method provided in embodiments of this application. FIG. 1 is a diagram of an application scenario of the sensor software change method according to an embodiment of this application. The method is applied to an intelligent driving device 100. At least one sensor 200 and at least one controller 300 are disposed on the intelligent driving device 100. A wired or wireless manner may be used for connection between sensors 200, between the sensor 200 and the controller 300, and between controllers 300. It should be understood that FIG. 1 is merely a diagram, and a connection relationship between the sensor 200 and the controller 300 is not shown in FIG. 1. The intelligent driving device 100 may further include another device that is also not shown in FIG. 1.

A sensor is a vulnerable consumable. For the sensors 200 mounted on the intelligent driving device 100, one or more of the sensors need to be replaced probably due to damage such as a collision or a fault, hardware replacement, and the like. In this case, after a replacing sensor 200 is connected to the intelligent driving device 100, if a software version of the sensor 200 is inconsistent with a software version of the intelligent driving device 100, there is a high probability that a function of the sensor 200 is unavailable due to a version inconsistency. For example, the intelligent driving device 100 has been upgraded to a first version. If a sensor is damaged and unavailable, a replacing sensor 200 is connected, and a software version of the sensor 200 is a second version, there is a high probability that the first version and the second version do not match, and consequently a function of the sensor 200 is unavailable. Therefore, software of the replacing sensor 200 needs to be changed.

The intelligent driving device 100 is a comprehensive system that integrates functions such as environment sensing, decision-making planning, and multi-level assisted driving. The intelligent driving device 100 is a next-generation vehicle that is equipped with an advanced sensing system, a decision-making system, and an execution system, uses new technologies such as information communication, the Internet, big data, cloud computing, and artificial intelligence, and has partial or full self-driving functions, and gradually transforms from a pure transportation tool to intelligent mobile space. In this embodiment of this application, a function of the intelligent driving device 100 may also be performed by a module (for example, a chip) in the intelligent driving device 100, or may be performed by a control subsystem including an intelligent driving function. A specific technology and a specific device form that are used by the intelligent driving device 100 are not limited in embodiments of this application.

The sensor 200 may be a lidar, a millimeter wave radar, an ultrasonic radar, a camera, an inertial navigation system, or the like. The intelligent driving device 100 that has an assisted driving capability is usually equipped with a plurality of sensors of various types. The sensor 200 may be specifically a single-port device. That is, the sensor 200 includes only one data transmission port, and the sensor 200 transmits data to the controller 300 through the data transmission port. Optionally, in addition to including a single-port device, the sensor 200 may be a multi-port device. This is not limited herein. A specific technology and a specific device form used by the sensor 200 are not limited in embodiments of this application.

In this embodiment of this application, only a single connected sensor is used as an object for description. In an actual operation process, a type and a quantity of the at least one sensor 200 connected to the intelligent driving device 100 may be set based on an actual situation.

The controller 300 is a core electronic control unit for implementing control decision-making of an entire vehicle. In this embodiment of this application, the controller 300 queries for the software version of the sensor 200, and sends a software package to the sensor 200 when the versions do not match, to change software of the sensor 200. A specific technology and a specific device form used by the controller 300 are not limited in embodiments of this application.

Optionally, the intelligent driving device 100 may include two or more controllers 300. A redundancy design may be formed between the two or more controllers 300. When any one of the controllers is faulty, the other controller may assist in completing a data processing process, thereby avoiding a single point of failure of the controller 300 and avoid affecting safety and reliability of the intelligent driving device 100.

It should be noted that the two or more controllers 300 may be devices of a same type, or in some cases, may be devices of different types. Further, the controller 300 is merely an example of this application. In another possible implementation, the controller 300 may include another type of controller like an entire-vehicle controller and a sensor corresponding to the controller.

It may be understood that the foregoing components or devices may communicate with each other via a controller area network (controller area network, CAN), a vehicle-mounted Ethernet, or the like. This is not limited in this application. In addition, mounting positions of the sensor 200 and the controller 300 that are on the intelligent driving device 100 and that are shown in FIG. 1 are merely examples for description, and are not limited.

**In** an extended application scenario, a cloud server 400 or an upper computer 500 is further included.

The cloud server 400 is a software platform that uses an application virtualization technology, and integrates a plurality of functions such as software search, download, use, management, and backup. **In** correspondence with this embodiment of this application, a first software package that is stored in the intelligent driving device 100 in advance and that corresponds to the sensor may be obtained from the cloud server 400. When the cloud server 400 provides, for example, a software upgrade service for the intelligent driving device 100, the intelligent driving device 100 may obtain, from the cloud server 400, an entire software upgrade package corresponding to the intelligent driving device. A specific technology and a specific device form used by the cloud server 400 are not limited in embodiments of this application.

The upper computer 500 is a computer or a single-chip microcomputer that can directly send operation instructions, and usually provides a user operation interaction interface and displays feedback data to a user. A typical device type includes a computer, a mobile phone, a tablet, a panel, a touchscreen, and the like. In correspondence with this embodiment of this application, a first software package that is stored in the intelligent driving device 100 in advance and that corresponds to the sensor may be obtained from the upper computer 500. When the upper computer 500 provides, for example, a software upgrade service for the intelligent driving device 100, the upper computer 500 sends, to the intelligent driving device 100, an entire software upgrade package that includes the first software package. FIG. 1 shows that the upper computer 500 (a personal computer is used as an example for illustration) communicates with the controller 300 in the intelligent driving device 100 via a CAN bus. A specific technology and a specific device form used by the upper computer 500 are not limited in embodiments of this application.

It may be understood that the entire software upgrade package corresponding to the intelligent driving device 100 may be obtained from the cloud server 400 or the upper computer 500, or may be obtained based on another device. Specifically, this may be set based on an actual requirement. This is merely an example for description herein, and is not limited.

The foregoing describes a scenario to which a sensor software change method provided in embodiments of this application is applied. The following describes in detail an implementation process of the sensor software change method provided in embodiments of this application.

First, to better understand solutions in embodiments of this application, the following first describes related terms and concepts that may be used in embodiments of this application.

### (1) Intelligent driving device

The intelligent driving device may include an intelligent vehicle, and may further include an intelligent machine device that is independently developed for various specific service scenarios, for example, an intelligent device such as an intelligent robot that can run a computer program of a sensor software change method. An intelligent vehicle is used as an example. The intelligent driving device may include an intelligent device such as a vehicle-mounted computer, a vehicle-mounted controller, or a vehicle driving control system. As intelligent driving rapidly develops, currently, an intelligent vehicle may include the following levels: L1 level: assisted driving: Assisted driving can help a driver complete some driving tasks and can help complete only one driving operation. In addition, the driver needs to monitor a driving environment and be ready to take over the vehicle at any time. Typical technologies include a lane keeping system and a cruise control system. L2 level: partial automation: Operations of acceleration and deceleration, and steering can be automatically performed at the same time. This means that an adaptive cruise system and a lane keeping system can work at the same time. L3 level: conditional automation: In a specific environment, a vehicle can implement automatic acceleration and deceleration and steering. A driver does not need to perform an operation, and does not need to monitor a surrounding environment of a vehicle body. However, the driver needs to be ready to take over the vehicle at any time, to cope with a situation that cannot be handled by a self-driving system. L4 level: high automation: A driver is not required in an entire driving process. However, there is also a limitation. For example, a vehicle speed is limited to not exceeding a specific value, and a driving area is fixed. In addition, after self-driving of this level is implemented, there is no need to mount a brake and a throttle pedal. L5 level: full automation: Driving can be fully adapted, and any driving environment can be adapted.

### (2) Sensor

The sensor is a detection apparatus, can sense measured information, and can convert, for outputting, the sensed information into an electrical signal or information in another required form according to a specific rule, to meet requirements such as information transmission, processing, storage, display, recording, and control. Characteristics of the sensor include miniaturization, digitization, intelligence, multifunction, systematization, and network-based. A sensor is a primary link of automatic detection and automatic control. A self-driving vehicle can identify a road, a vehicle on a road, a pedestrian, an obstacle, a transportation infrastructure, and/or the like by using a sensor.

Advancement of intelligence relies on development of a sensor. As a level of intelligence is improved, an environment that needs to be sensed becomes more complex, and a quantity of sensors also increases. A vehicle with an assisted driving capability is usually equipped with a plurality of sensors of various types such as a lidar, a millimeter wave radar, an ultrasonic radar, a camera, and an inertial navigation system.

### (3) Unified diagnostic service (unified diagnosis service, UDS)

Development, adjustment, implementation, and maintenance of different diagnostic communication protocols bring unnecessary costs to a vehicle manufacturer and a system supplier. To solve this problem, different technical protocols and data communication principles are compiled into an international standard, which is usually referred to as the UDS. The UDS is a universal vehicle diagnosis protocol, not related to data links. The UDS is oriented to an application layer in an open system interconnection (Open System Interconnection, OSI) model and can be implemented on different vehicle buses.

In the UDS, a diagnostic session control service is used to enable a diagnostic session of a server. The diagnostic session is associated with a series of diagnosis services or functions. Only a diagnostic service supported by a currently activated diagnosis session can be responded. Usually, there are more than two diagnostic sessions, including one default session (default session) and several non-default sessions (non-default session). Only one diagnostic session is in an activated state at a same moment. The server can associate a diagnostic service by responding to the diagnostic session.

### (4) Upper computer

The upper computer is a computer device that can directly send a control command, for example, an intelligent handheld terminal device such as a personal computer, a mobile phone, or a tablet computer, and an intelligent wearable device such as a smart band or a smartwatch. The upper computer corresponds to a lower computer, and is configured to send an instruction to the lower computer and receive feedback data from the lower computer. In concept, a controlling party and a service providing party are upper computers, and a controlled party and a serviced party are lower computers. In this embodiment of this application, the upper computer is mainly configured to implement a local-end upgrade on software of a sensor.

### (5) Cloud

The cloud is a software platform that uses an application virtualization technology, and integrates a plurality of functions such as software search, download, use, management, and backup. Various types of common software can be encapsulated in an independent virtualization environment via the platform, thereby preventing application software from coupling with a system and achieving a goal of green software use. In this embodiment of this application, the cloud is mainly configured to: store a software package of a sensor; and change a software version of the sensor. The cloud usually includes a cloud server.

The foregoing describes the terms provided in embodiments of this application. To better understand the technical solutions provided in embodiments of this application, the following describes software upgrade methods used in conventional technologies by using an example in which an intelligent driving device is an intelligent vehicle.

### (1) OTA upgrade

An OTA technology is a technology of downloading data via a wireless network, and is a technology in which a terminal downloads an upgrade package on a remote server via a wireless network to upgrade a system or an application. The OTA technology is usually applied to a process of upgrading a fixed version of system software of a terminal device such as a mobile phone or a tablet computer. In a current upgrade method, a single-package upgrade policy is mainly used. Specifically, a terminal device initiates software version detection once, and a server returns a download path to the terminal device, so that the terminal device obtains an OTA upgrade package based on the download path, and then performs a version upgrade based on the OTA upgrade package.

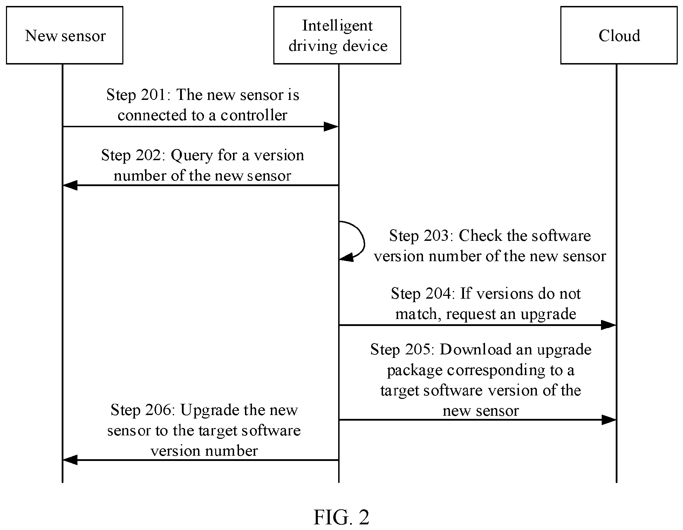

In correspondence with an application scenario of this solution, an intelligent driving device may query for a sensor version. When a new sensor version that can be updated is identified, the OTA upgrade manner is triggered, and an updated software package is downloaded from a cloud or the like to a local memory for an upgrade. FIG. 2 is a schematic flowchart of the OTA upgrade method according to an embodiment of this application. The OTA upgrade method includes the following step 201 to step 206.

Step 201: After it is detected that an old sensor needs to be replaced, connect a new sensor to an intelligent driving device.

Step 202: After connection authentication of the new sensor succeeds, the intelligent driving device queries for a software version number of the new sensor, to detect whether the software version of the new sensor is consistent with a software version of the intelligent driving device.

Step 203: The intelligent driving device checks whether the software version number of the new sensor is a matching version number.

Step 204: If not matched, request an upgrade package corresponding to a target version of the new sensor from a cloud.

Step 205: Download, from the cloud, the upgrade package of the target version corresponding to the new sensor to the intelligent driving device.

Step 206: The intelligent driving device sends the upgrade package corresponding to the target version to the new sensor, and upgrades the new sensor to the target software version.

It may be understood that in the foregoing method, a latest software upgrade package is first downloaded from a software platform such as a cloud via a wireless communication network. Then, software is upgraded based on the software upgrade package. However, the OTA technology has the following disadvantages as software functions are diversified.
(a) A software upgrade package that needs to be downloaded via a wireless network is larger, and a quantity of download times also increases. This consumes time and wastes traffic, and brings larger data traffic overheads to a user.
(b) In an environment with a poor network signal, a communication signal of an intelligent driving device is poor and unstable, and a plurality of software packages cannot be smoothly downloaded in a short time. Consequently, a software upgrade cannot be implemented in time.
(c) In an actual maintenance scenario, after a new sensor is connected, there are a plurality of reasons why a function of the sensor is unavailable. Maintenance personnel cannot immediately determine that the unavailability is caused by a mismatch of a software version of the sensor. Therefore, network connecting and an upgrade are not immediately performed. This further increases maintenance time and communication and learning costs.

### (2) Local-end upgrade using an upper computer

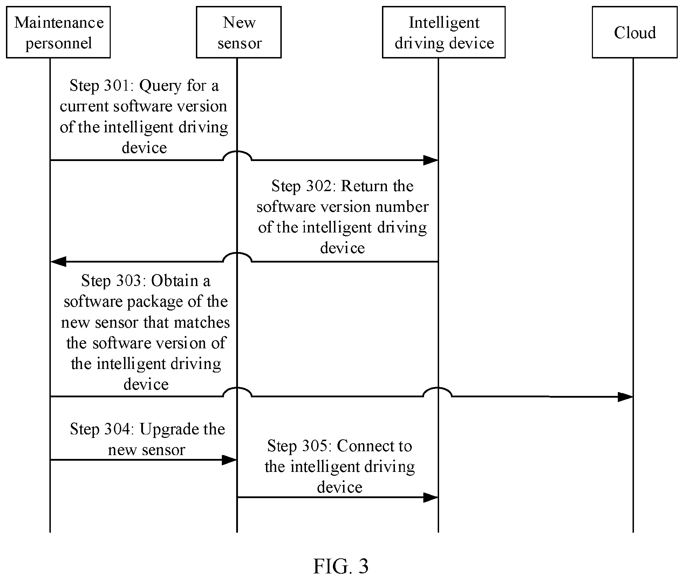

The local-end upgrade refers to a process in which maintenance personnel update a new sensor to a target version in advance and then replace the new sensor to an intelligent driving device, to implement version matching. FIG. 3 is a schematic flowchart of the local-end software upgrade method according to an embodiment of this application. Main steps are as follows.

Step 301: Maintenance personnel query for a current software version of the intelligent driving device.

Step 302: The intelligent driving device feeds back the current software version number to the maintenance personnel.

Step 303: The maintenance personnel download, from a cloud, a software package of the new sensor that matches the software version of the intelligent driving device.

Step 304: The maintenance personnel upgrade the version of the new sensor by using a dedicated sensor programming tool.

Step 305: Connect the upgraded new sensor to the intelligent driving device.

However, this technology has the following disadvantages.
(a) A dedicated device needs to be used to update firmware of a sensor, and the operation is complex.
(b) Requirements on skills of maintenance personnel are high, and maintenance personnel are required to assist in a software upgrade.

To overcome defects of the sensor upgrade methods shown in FIG. 2 and FIG. 3, this application provides a sensor software change method. For ease of understanding, with reference to the accompanying drawings and application scenarios, the following specifically describes the sensor software change method provided in embodiments of this application. It may be understood that the intelligent driving device shown in FIG. 1 is only one of the application scenarios. The sensor software change method may also be applied to an intelligent driving device such as an intelligent robot. This is not specifically limited herein.

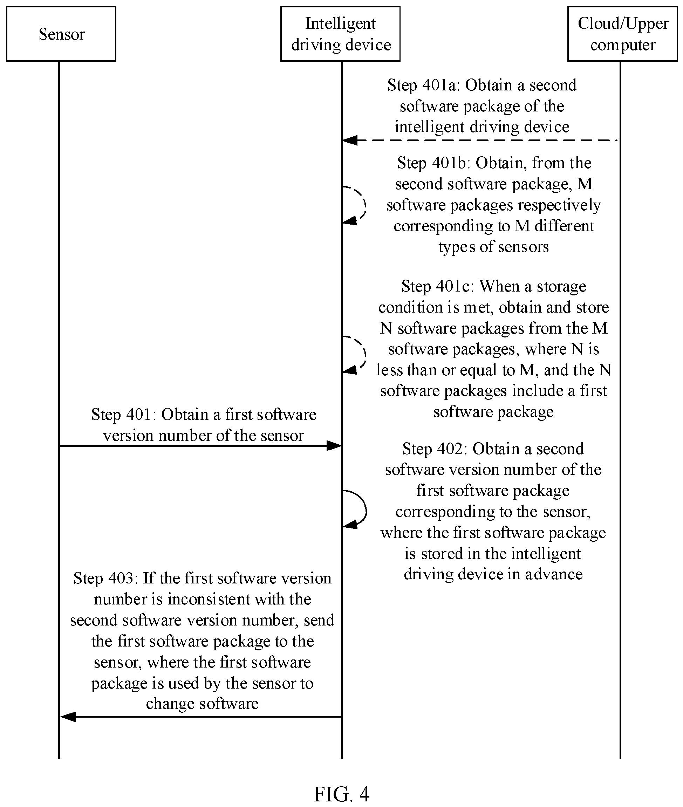

FIG. 4 is a schematic flowchart of the sensor software change method according to an embodiment of this application. In an optional embodiment, the sensor software change method shown in FIG. 4 may be applied to the intelligent driving device shown in FIG. 1. As shown in FIG. 4, the sensor software change method includes step 401 to step 403.

Before step 401, in a possible implementation, the method includes step 401a to step 401c.

Step 401a: Obtain a second software package of the intelligent driving device.

In this embodiment of this application, the intelligent driving device may obtain, from a cloud or an upper computer, or in another manner, the second software package corresponding to the intelligent driving device. The second software package is usually an entire software package corresponding to the intelligent driving device, and is used to change all software in the intelligent driving device.

It may be understood that after the intelligent driving device is delivered, or a software/hardware upgrade is performed, a software program running on the intelligent driving device is usually re-upgraded. In this case, the intelligent driving device may obtain the upgraded second software package from a device such as a cloud or an upper computer, to upgrade the software program of the intelligent driving device based on the second software package.

Step 401b: The intelligent driving device obtains, from the second software package, M software packages respectively corresponding to M different types of sensors, where M is a positive integer greater than or equal to 1.

In this embodiment of this application, to avoid a waste of storage space, after obtaining the entire software upgrade package corresponding to the intelligent driving device, that is, the second software package, the intelligent driving device does not directly store the second software package in a memory of the intelligent driving device. Instead, the M software packages corresponding to the M types of sensors are obtained from the second software package. In other words, only one software package is cached for each type of sensor. In this way, a problem in which an excessively large cache occupies storage space is avoided.

It may be understood that a storage method of caching only one software package for each type of sensor to avoid a waste of storage space is only one optional storage manner. This is not limited herein. In addition, the sensor types may be classified according to a rule such as a function or an application scenario. A rule for a value of M and a corresponding sensor classification reference may be set based on an actual requirement. This is not limited herein.

Step 401c: When a storage condition is met, obtain and store N software packages from the M software packages, where N is less than or equal to M, and the N software packages include a first software package.

In this embodiment of this application, after the M software packages respectively corresponding to the M different types of sensors are obtained, remaining storage space of the memory of the intelligent driving device needs to be determined. If the remaining storage space of the memory meets a corresponding storage condition, the N software packages are obtained from the M software packages and are stored. The N software packages include the first software package.

It may be understood that to avoid a waste of storage space of the memory, in an actual operation process, the N software packages may be cached in a specific scenario based on an actual application scenario, a damage probability and a life cycle of a sensor and an internal device of the sensor, and the like, thereby further fully utilizing the storage space. The N software packages include the first software package, and N is less than or equal to M. For example, a sensor mounted outside the intelligent driving device is usually more likely to be damaged, or in a high-temperature scenario, a sensor that is sensitive to a high temperature is more likely to be damaged. In these scenarios, only a sensor with a high probability of damage may be cached, to save the remaining storage space of the memory. However, in a general case, the M software packages are directly stored (that is, N is equal to M), to ensure that a randomly damaged sensor can adapt to an appropriate sensor type from the M software packages, thereby obtaining the first software package corresponding to the sensor.

It should be noted that the first software package corresponding to the sensor is stored in the memory of the intelligent driving device in advance, so that when software of the sensor needs to be changed subsequently, the software of the sensor can be changed by directly obtaining a locally stored software package, thereby quickly upgrading the sensor without a network connection. In addition, the method in step 401a to step 401c is only one implementation of obtaining and storing the first software package. All other embodiments obtained by a person skilled in the art based on this embodiment without creative efforts shall fall within the protection scope of the present invention.

Further, step 401 to step 403 are specifically as follows.

Step 401: After the sensor is connected to the intelligent driving device, obtain a first software version number of the sensor.

In this embodiment of this application, after an old sensor is removed from the intelligent driving device due to a fault, hardware replacement, or the like, if a newly connected sensor is detected in the intelligent driving device by using a controller, the sensor actively performs query and obtains the first software version number corresponding to the software package of the sensor .

For example, a software version number usually includes two to four parts, including a major version number (major), a minor version number (minor), an internal version number (build), and a revision number. The two parts of the major version number and the minor version number are mandatory. The two parts of the internal version number and the revision number are optional. The major version number increases when a critical upgrade is performed for software. The minor version number increases when there is a new function for software. The internal version number increases when there is a minor change, such as fault rectification. When a new version is released, the major version number, the minor version number, or the build version number (if any) needs to be updated, depending on a degree of the change. When there is a critical update, the major version number increases. When there is a major update, but the major version number is not updated, the minor version number is updated. If an update is minor, for example, only a fault is rectified, the build version number is updated. Generally, a version number of an official version is "1.0". An upgrade process of a software version number is, for example, "1.0" to "1.0.1", "1.0.1" to "1.0.2", and "1.0.2" to "1.1". It should be understood that composition of a software version number, a numbering rule, and specific numbering content may be set based on an actual requirement. These are merely examples for description, and are not limited. It may be understood that after a sensor is connected through a corresponding hardware interface, a notification mechanism is triggered. Therefore, the controller of the intelligent driving device can detect that a sensor is connected, and can locate a specific port for the connection. It should be understood that for sensors of a same type, for hardware ports of a same type, any port can be selected for the connection.

Optionally, in a possible implementation, in step 401, the main step of obtaining a first software version number of the sensor includes:
sending a version query request to the sensor; and
receiving the first software version number fed back by the sensor.

In this possible implementation, after detecting that a new sensor is connected, the controller of the intelligent driving device actively sends a version query request to the sensor, and stores, in the memory, the received first software version number fed back by the sensor.

It may be understood that in conventional technologies, an active query operation is not performed immediately after it is detected that hardware is inserted. In this embodiment of this application, after a sensor is connected to the intelligent driving device, the intelligent driving device actively sends a version query request to the connected sensor, to obtain a software version number corresponding to the sensor, to automatically query for the version after insertion. In addition, when a version change requirement is met, a quick upgrade is completed after insertion, without maintenance personnel participating in a software change process.

Optionally, in a possible implementation, before obtaining a first software version number of the sensor, the sensor software change method further includes:
performing connection authentication on the sensor, and establishing a communication connection to the sensor after the connection authentication succeeds.

In this possible implementation, after detecting that the sensor is connected, the controller of the intelligent driving device first performs the connection authentication on the sensor, to ensure that the connected sensor can normally communicate with the intelligent driving device, and ensure a subsequent automatic change of the software of the sensor when a communication fault is excluded.

For example, a connection authentication method may include a UDS-based diagnosis method. A diagnosis request is sent to the sensor by using the controller of the intelligent driving device. Based on the UDS protocol, when receiving a diagnosis request, the sensor first checks whether a current session (session) can execute the request. For example, if a service corresponding to the request is at a high level, it also needs to be ensured that the session is at a corresponding high security level. If the sensor is in an inactive default session state, session switching is performed based on the request, a session is established with the intelligent driving device, and a corresponding diagnosis service is executed.

Step 402: Obtain a second software version number of the first software package corresponding to the sensor. The first software package is stored in the intelligent driving device in advance.

In this embodiment of this application, after detecting that a sensor is connected, the controller of the intelligent driving device obtains, from the memory of the intelligent driving device, the second software version number corresponding to the first software package. The first software package corresponding to the sensor is stored in the memory of the intelligent driving device in advance, and may be directly obtained locally. Optionally, for one manner of obtaining the first software package, refer to the foregoing step 401a to foregoing step 401c.

It may be understood that a large difference between the intelligent driving device and a conventional device is that a software upgrade frequency of the intelligent driving device is usually high. To obtain a latest function, an upgrade such as an OTA upgrade or a local-end upgrade needs to be frequently performed on software. In this case, the sensor matching the intelligent driving device also needs to be upgraded. Therefore, each time after the intelligent driving device is delivered or upgraded, the software package corresponding to the intelligent driving device may be obtained from the cloud, the upper computer, or the like, to complete a software update of the intelligent driving device. However, using the OTA upgrade manner depends on network communication quality and needs a network connection to download a software package, and a process of downloading the software package consumes time and traffic. The local-end upgrade is more dependent on the maintenance personnel and a dedicated device, and an operation is complex. In this embodiment of this application, the software package is stored in the intelligent driving device in advance, so that the first software package of the sensor and the second software version number corresponding to the first software package can be quickly obtained without a network connection, thereby quickly changing the software of the sensor.

Optionally, in a possible implementation, the storage condition includes that a relationship between a size of the N software packages and the remaining storage space of the memory of the intelligent driving device meets a preset condition.

In this possible implementation, it may be understood that a size of a software package of a single sensor is usually small, and a cache does not occupy large storage space. However, to avoid a waste of storage space, the remaining space of the memory of the intelligent driving device is obtained, the size of the N software packages in the M software packages is compared with the remaining storage space of the memory, and the N software packages are stored only when the preset condition is met. This avoids a problem in which a cache occupies too much space, and fully utilizes the remaining storage space of the memory of the intelligent driving device.

For example, the preset condition may be a multiple condition. Because a size of a software package corresponding to sensors is usually small, storage space greater than or equal to K times a size of N sensors, for example, 10 times, may be reserved in the remaining storage space. In this way, the software packages of the sensors are stored when the storage space of the memory is surplus. It should be noted that specific content of the preset condition may be set based on an actual requirement or an experiment. This is not limited herein.

Step 403: If the first software version number is inconsistent with the second software version number, send the first software package to the sensor, where the first software package is used by the sensor to change software.

In this embodiment of this application, if the intelligent driving device determines that a software version number of the intelligent driving device is inconsistent with a software version number of a newly connected sensor, software of the connected sensor needs to be changed. A specific operation procedure is as follows: The intelligent driving device sends the locally stored first software package to the sensor, so that the sensor changes software based on the first software package.

It may be understood that the software change includes two cases: a software upgrade and a software rollback. In correspondence with this embodiment of this application, similarly, the inconsistency between the first software version number and the second software version number corresponds to two cases. In an actual running process, if the first software version number is later than the second software version number, the software version of the sensor needs to be rolled back to the second software version number, to complete the software change of the sensor. If the first software version number is earlier than the second software version number, the software version of the sensor needs to be upgraded to the second software version number, to complete the software change of the sensor.

In addition, in this embodiment of this application, the first software package corresponding to the sensor is stored in the memory of the intelligent driving device in advance. When a version comparison indicates an inconsistency, the locally stored first software package is directly sent to the sensor via the controller of the intelligent driving device, so that the sensor changes software. It may be understood that when a network connection is not needed, data may be transmitted between the sensor and the controller of the intelligent driving device via a hardware communication link, for example, a CAN bus or an Ethernet. This may be determined based on a specific situation.

Optionally, in a possible implementation, a software change process of the sensor is displayed on a specified screen.

In this possible implementation, a device such as an external computer or a display screen is connected, to display the upgrade process on the specified screen. When the intelligent driving device needs to change the software of the sensor, the intelligent driving device may notify, via the display screen, a staff member of a current working state of the sensor and an operation corresponding to the intelligent driving device, to learn the software change process of the sensor.

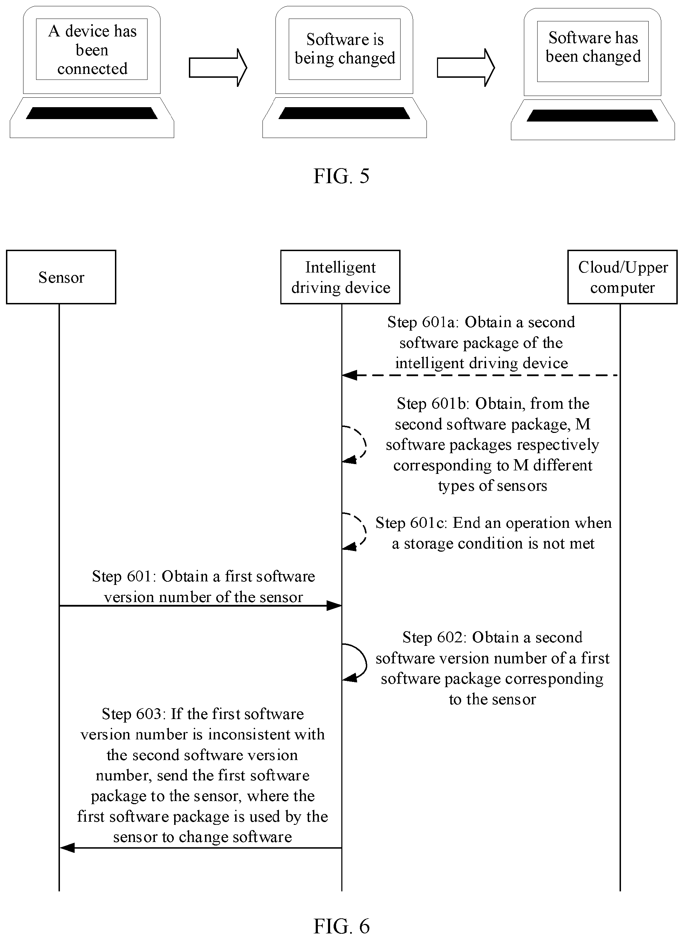

For example, FIG. 5 is a diagram of operation display of the sensor software change method according to an embodiment of the present invention. After the sensor is connected to the intelligent driving device, and the connection authentication succeeds, content "The device has been connected." may be displayed on the screen to notify the staff member that the sensor is successfully connected. The content can be used to exclude a possibility of a hardware connection fault. When it is detected that the software version of the sensor is inconsistent with the software version of the intelligent driving device, the software version of the sensor is changed, and content "The software is being changed." is displayed on the screen, to notify the staff member that the sensor is currently in a state in which the software is being changed. After the software of the sensor is changed, content "The software has been changed." may be displayed on the screen, to notify the staff member that a sensor software change operation is complete. The staff member is notified of the current working state of the sensor, which reduces a redundant maintenance operation in the sensor software change process. Optionally, the content "The software is being changed." may be further refined into content "The software is being upgraded." or "The software is being rolled back. ", so that the staff member further more intuitively understands the software change process of the sensor.

It may be understood that specific content displayed on the display screen and a device type of the display screen may be set based on an actual requirement. The diagram shown in FIG. 5 is merely an optional implementation, and is not limited herein.

It may be understood that in this embodiment of this application, after detecting that a sensor is connected, the intelligent driving device actively performs query and obtains the first software version number of the sensor, to automatically query for a version without manual intervention after the sensor is inserted. After obtaining the first software version number of the sensor, the intelligent driving device locally obtains the second software version number of the first software package corresponding to the sensor, and compares the second software version number with the first software version number, to check a software version of the sensor. If it is determined that the first software version number is inconsistent with the second software version number, the first software package is sent to the sensor, so that the sensor can change software based on the first software package, thereby ensuring that the software version of the sensor is consistent with the software version of the intelligent driving device, and a function of the sensor can be normally used. According to the method in this embodiment, a software package corresponding to the sensor is locally stored in advance, so that when the software version of the sensor needs to be changed, software of the sensor can be quickly changed without a network connection. In this way, a download operation based on a network connection is omitted, and a process of participation by maintenance personnel is also omitted, thereby improving maintenance efficiency.

FIG. 6 is another schematic flowchart of a sensor software change method according to an embodiment of this application. The sensor software change method shown in FIG. 6 may be applied to the intelligent driving device shown in FIG. 1. As shown in FIG. 6, the sensor software change method includes the following step 601 to step 603.

Before step 601, optionally, in a possible implementation, the method further includes step 601a to step 601c.

Step 601a: Obtain a second software package of the intelligent driving device.

It should be noted that step 601a is similar to the foregoing step 401a. For a specific implementation and technical details, refer to the foregoing step 401a. Details are not described herein again.

Step 601b: The intelligent driving device obtains, from the second software package, M software packages respectively corresponding to M different types of sensors, where M is a positive integer greater than or equal to 1.

It should be noted that step 601b is similar to the foregoing step 401b. For a specific implementation and technical details, refer to the foregoing step 401b. Details are not described herein again.

Step 601c: End an operation when a storage condition is not met.

In this embodiment of this application, a controller of the intelligent driving device obtains, from the second software package, the M software packages corresponding to the M types of sensors. In other words, only one software package is cached for each type of sensor. If it is determined that the storage condition is not met, it indicates that the software package corresponding to the sensor cannot be cached in remaining storage space of a memory of the intelligent driving device. Therefore, a first software package corresponding to the sensor cannot be stored in advance.

Further, step 601 to step 603 are specifically as follows.

Step 601: After the sensor is connected to the intelligent driving device, obtain a first software version number of the sensor.

It should be noted that step 601 is similar to the foregoing step 401. For a specific implementation and technical details, refer to the foregoing step 401. Details are not described herein again.

Step 602: Obtain a second software version number of the first software package corresponding to the sensor.

In this embodiment of this application, when the storage condition is not met, the first software package corresponding to the sensor and the second software version number of the first software package are obtained in real time, to complete the operation. Optionally, the second software version number of the first software package corresponding to the sensor may be downloaded and obtained online from a cloud or an upper computer. Alternatively, the second software version number of the first software package corresponding to the sensor may be obtained in real time by using another method.

It may be understood that to avoid a waste of storage space, the controller of the intelligent driving device obtains, from the second software package, the M software packages corresponding to the M types of sensors. In other words, only one software package is cached for each type of sensor. If it is determined that the storage condition is not met, it indicates that software packages corresponding to various types of sensors cannot be cached in the remaining storage space of the memory of the intelligent driving device. In this case, the first software package corresponding to the sensor and the second software version number corresponding to the first software package cannot be obtained by using the method shown in FIG. 4. The second software version number of the first software package corresponding to the sensor can be obtained only in a real-time obtaining manner. Optionally, the second software version number of the first software package corresponding to the sensor may be obtained in real time via a cloud, an upper computer, another device, or the like.

Optionally, in a possible implementation, the storage condition includes:
A relationship between a size of the N software packages and the remaining storage space of the memory of the intelligent driving device meets a preset condition.

Step 603: If the first software version number is consistent with the second software version number, send the first software package to the sensor, where the first software package is used by the sensor to change software.

It should be noted that step 603 is similar to the foregoing step 403. For a specific implementation and technical details, refer to the foregoing step 403. Details are not described herein again.

It may be understood that when the storage condition is not met, the first software package corresponding to the sensor cannot be stored in a local memory of the intelligent driving device in advance. The first software package corresponding to the sensor can be obtained in real time only via a cloud, an upper computer, or another method depending on network communication quality.

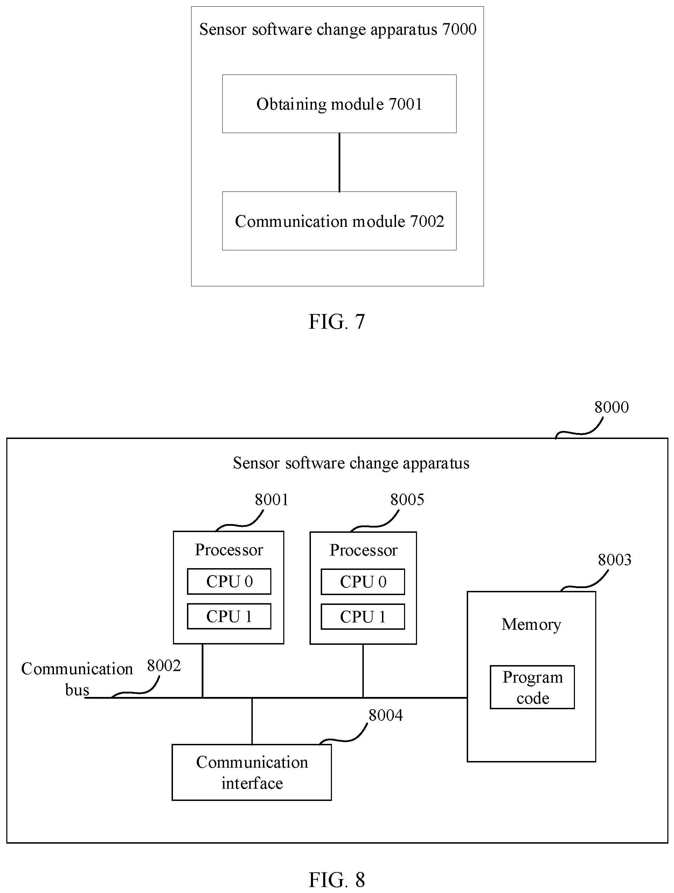

FIG. 7 is a diagram of a structure of a sensor software change apparatus according to an embodiment of this application. The sensor software change apparatus is used in the intelligent driving device shown in FIG. 1. The sensor software change apparatus 7000 includes:
an obtaining module 7001, configured to: after a sensor is connected to the intelligent driving device, obtain a first software version number of the sensor, where
the obtaining module 7001 is further configured to obtain a second software version number of a first software package corresponding to the sensor, where the first software package is stored in the intelligent driving device in advance; and
for a specific description of the obtaining module 7001, refer to the description of step 401 and step 402 in the foregoing embodiment, and details are not described herein again; and
a communication module 7002, configured to: if the first software version number is inconsistent with the second software version number, send the first software package to the sensor, where the first software package is used by the sensor to change software; and
for a specific description of the communication module 7002, refer to the description of step 403 in the foregoing embodiment, and details are not described herein again.

Optionally, in a possible implementation:
The obtaining module 7001 is further configured to obtain a second software package of the intelligent driving device.

The obtaining module 7001 is further configured to obtain, from the second software package, M software packages respectively corresponding to M types of sensors, where M is a positive integer greater than or equal to 1.

The obtaining module 7001 is further configured to: when a storage condition is met, obtain and store N software packages from the M software packages, where N is less than or equal to M, and the N software packages include the first software package.

Optionally, in a possible implementation, the storage condition includes:
A relationship between a size of the N software packages and the remaining storage space of the memory of the intelligent driving device meets a preset condition.

Optionally, in a possible implementation, the communication module 7002 is further configured to:
after detecting that the sensor is connected to the intelligent driving device, perform connection authentication on the sensor, and establish a communication connection to the sensor after the connection authentication succeeds.

Optionally, in a possible implementation, the obtaining module 7001 is specifically configured to:
after sending a version query request to the sensor via the communication module 7002, receive, via the communication module 7002, the first software version number fed back by the sensor.

Optionally, in a possible implementation, the sensor software change apparatus further includes a display module.

In this implementation, the display module is mainly configured to display an operation process of a sensor software change method, so that a staff member can more intuitively understand a sensor software change process.

In this embodiment, after the sensor is connected to the intelligent driving device, the obtaining module 7001 obtains the first software version number of the sensor. Then, the obtaining module 7001 obtains the second software version number of the first software package corresponding to the sensor, where the first software package is stored in the intelligent driving device in advance. Finally, when the first software version number is inconsistent with the second software version number, the communication module 7002 sends the first software package to the sensor, where the first software package is used by the sensor to change software. Therefore, a software package corresponding to the sensor is locally stored in advance, so that when the software version of the sensor needs to be changed, software of the sensor is quickly changed without a network connection. In this way, a download operation based on a network connection is omitted, and a process of participation by maintenance personnel is also omitted, thereby improving maintenance efficiency.

In this embodiment, operations performed by the units in the sensor software change apparatus 7000 are similar to those described in the method embodiment shown in FIG. 4. The units may be used to implement functions of the intelligent driving device in the foregoing method embodiment, and may also implement beneficial effects of the foregoing method embodiment. Details are not described herein again.

FIG. 8 is a diagram of a structure of another sensor software change apparatus according to an embodiment of this application. As shown in FIG. 8, the sensor software change apparatus 8000 is implemented by a general bus architecture.

The sensor software change apparatus 8000 includes at least one processor 8001, a communication bus 8002, a memory 8003, and at least one communication interface 8004.

The processor 8001, the memory 8003, and the communication interface 8004 communicate with each other via the communication bus 8002, or may implement communication by wireless transmission or by another means. The memory 8003 is configured to store instructions. The processor 8001 is configured to execute the instructions stored in the memory 8003. The memory 8003 stores program code. The processor 8001 may invoke the program code stored in the memory 8003, to perform step 401 to step 403 in the embodiment shown in FIG. 1. For specific implementation, refer to specific descriptions of step 401 to step 403 in the embodiment shown in FIG. 4. Details are not described herein again.

Optionally, the processor 8001 is a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device (programmable logic device, PLD), a transistor logic device, a hardware component, or any combination thereof. The PLD is a complex programmable logic device (complex programmable logic device, CPLD), a field programmable gate array (field programmable gate array, FPGA), generic array logic (generic array logic, GAL), or any combination thereof.

The communication bus 8002 is configured to transmit information between the processor 8001, the memory 8003, and the communication interface 8004. The communication bus 8002 is classified into an address bus, a data bus, a control bus, and the like. For ease of representation, only one thick line is used to represent the bus in the figure, but this does not mean that there is only one bus or only one type of bus.

Optionally, the memory 8003 is a read-only memory (read-only memory, ROM) or another type of static storage device that can store static information and instructions. Alternatively, the memory 8003 is a random access memory (random access memory, RAM) or another type of dynamic storage device that can store information and instructions. Alternatively, the memory 8003 is an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be configured to carry or store expected program code in a form of instructions or a data structure and that can be accessed by a computer. However, this is not limited thereto. Optionally, the memory 8003 exists independently, and is connected to the processor 8001 via the communication bus 8002. Optionally, the memory 8003 is integrated with the processor 8001.

The communication interface 8004 uses any apparatus such as a transceiver, and is configured to communicate with another device or a communication network. The communication interface 8004 includes a wired communication interface. Optionally, the communication interface 8004 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

In specific implementation, in an embodiment, the processor 8001 includes one or more CPUs, for example, a CPU 0 and a CPU 1 shown in FIG. 8.

In specific implementation, in an embodiment, the sensor software change apparatus 8000 includes a plurality of processors, for example, a processor 8001 and a processor 8005 shown in FIG. 8. Each of the processors is a single-core (single-CPU) processor or a multi-core (multi-CPU) processor. The processor herein is one or more devices, circuits, and/or processing cores configured to process data (for example, computer program instructions).

In some embodiments, the memory 8003 is configured to store program code for executing the solutions of this application, and the processor 8001 executes the program code stored in the memory 8003. In other words, the sensor software change apparatus 8000 implements the foregoing embodiment of the sensor software change method by using the program code in the processor 8001 and the memory 8003.

It may be understood that the method steps in embodiments of this application may be implemented in hardware, or may be implemented in software instructions that may be executed by the processor 8001. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. In addition, a scope of the apparatus described in this application is not limited thereto, and a structure of the apparatus may not be limited by that in FIG. 8. The apparatus may be an independent device, or may be a part of a larger device. For example, the apparatus may be:
(1) an independent integrated circuit IC, a chip, or a chip system or subsystem;
(2) a set including one or more ICs, where optionally, the IC set may further include a storage component that is configured to store data and/or instructions;
(3) a module that can be embedded in another device;
(4) a receiver, a terminal, an intelligent terminal, a wireless device, a handheld device, a mobile unit, a vehicle-mounted device, an artificial intelligence device, a machine device, a home device, a medical device, an industrial device, and the like;
(5) others, or the like.

It may be clearly understood by a person skilled in the art that, for the purpose of convenient and brief description, for a detailed working process of the foregoing described apparatus, refer to a corresponding process in the foregoing method embodiments. Details are not described herein again.

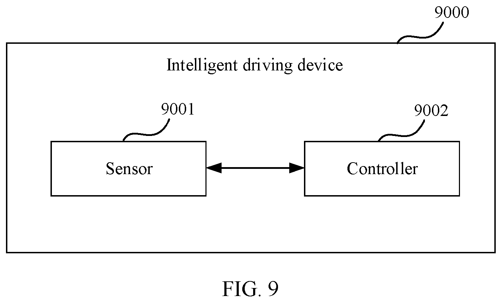

FIG. 9 is a diagram of a structure of an intelligent driving device according to an embodiment of this application. As shown in FIG. 9, the intelligent driving device 9000 includes at least one sensor 9001 and at least one controller 9002. In an optional implementation, the controller 9002 may correspond to the controller 300 shown in FIG. 1, and the sensor 9001 may correspond to the sensor 200 shown in FIG. 1. The controller 9002 executes computer-executable instructions to implement the operation steps of the sensor software change method shown in FIG. 4, or the controller 9002 includes the sensor software change apparatus shown in FIG. 7.

An embodiment of this application further provides a computer program product. When the computer product is executed by a computer, functions in any one of the foregoing method embodiments are implemented.

An embodiment of this application further provides a chip system. The chip system includes a processor, configured to implement functions of the intelligent driving device in the method in the foregoing aspects. In a possible design, the chip system further includes a memory, configured to store program instructions and/or data. The chip system may include a chip, or may include a chip and another discrete device.

It may be understood that the apparatus and method described in this application may alternatively be implemented in another manner. For example, the foregoing apparatus embodiments are merely examples. For example, unit division is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

Embodiments in this specification are all described in a progressive manner, same or similar parts between embodiments may be mutually referenced, and each embodiment focuses on a difference from other embodiments.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division, and there may be another division manner during implementation in actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. These are all not limited in this application. In addition, units or subunits described as separate components may or may not be physically separate, may or may not be physical units, or may be distributed into a plurality of circuit units. Some or all of the units may be selected based on an actual requirement to achieve the objectives of the solutions of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A sensor software change method, applied to an intelligent driving device, wherein the method comprises:
after a sensor is connected to the intelligent driving device, obtaining a first software version number of the sensor;
obtaining a second software version number of a first software package corresponding to the sensor, wherein the first software package is stored in the intelligent driving device in advance; and
if the first software version number is inconsistent with the second software version number, sending the first software package to the sensor, wherein the first software package is used by the sensor to change software.

2. The method according to claim 1, wherein the method further comprises:
obtaining a second software package of the intelligent driving device;
obtaining, from the second software package, M software packages respectively corresponding to M types of sensors, wherein M is a positive integer greater than or equal to 1; and
when a storage condition is met, obtaining and storing N software packages from the M software packages, wherein N is less than or equal to M, and the N software packages comprise the first software package.

3. The method according to claim 2, wherein the storage condition comprises that a relationship between a size of the N software packages and remaining storage space of a memory of the intelligent driving device meets a preset condition.

4. The method according to any one of claims 1 to 3, wherein before the obtaining a first software version number of the sensor, the method further comprises:
performing connection authentication on the sensor, and establishing a communication connection to the sensor after the connection authentication succeeds.

5. The method according to any one of claims 1 to 4, wherein the obtaining a first software version number of the sensor comprises:
sending a version query request to the sensor; and
receiving the first software version number fed back by the sensor.

6. A sensor software change apparatus, used in an intelligent driving device, wherein the apparatus comprises:
an obtaining module, configured to: after a sensor is connected to the intelligent driving device, obtain a first software version number of the sensor, wherein
the obtaining module is further configured to obtain a second software version number of a first software package corresponding to the sensor, wherein the first software package is stored in the intelligent driving device in advance; and
a communication module, configured to: if the first software version number is inconsistent with the second software version number, send the first software package to the sensor, wherein the first software package is used by the sensor to change software.

7. The apparatus according to claim 6, wherein the obtaining module is further configured to obtain a second software package of the intelligent driving device;
the obtaining module is further configured to obtain, from the second software package, M software packages respectively corresponding to M types of sensors, wherein M is a positive integer greater than or equal to 1; and
the obtaining module is further configured to: when a storage condition is met, obtain and store N software packages from the M software packages, wherein N is less than or equal to M, and the N software packages comprise the first software package.

8. The apparatus according to claim 7, wherein the storage condition comprises that a relationship between a size of the N software packages and remaining storage space of a memory of the intelligent driving device meets a preset condition.

9. The apparatus according to any one of claims 6 to 8, wherein the communication module is further configured to:
after the sensor is connected to the intelligent driving device, perform connection authentication on the sensor, and establish a communication connection to the sensor after the connection authentication succeeds.

10. The apparatus according to any one of claims 6 to 9, wherein the obtaining module is specifically configured to:
send a version query request to the sensor via the communication module; and
receive, via the communication module, the first software version number fed back by the sensor.

11. A sensor software change apparatus, comprising a memory and a processor, wherein the memory stores code, and the processor is configured to execute the code, to enable the sensor software change apparatus to perform the method according to any one of claims 1 to 5.

12. An intelligent driving device, comprising a sensor and a controller, wherein the controller executes computer-executable instructions to implement the method according to any one of claims 1 to 5, or the controller is the apparatus according to any one of claims 6 to 11.

13. A computer storage medium, wherein the computer storage medium stores a computer program, and when the program is executed by a computer, the computer is enabled to implement the method according to any one of claims 1 to 5.

14. A computer program product, wherein when the computer product is executed by a computer, the method according to any one of claims 1 to 5 is implemented.
